(19) Europäisches Patentamt
European Patent Office
Office européen des brevets

(11) **EP 3 348 347 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **17206651.6**

(22) Anmeldetag: **12.12.2017**

(51) Int Cl.:
**B23P 19/06** *(2006.01)* **B21K 25/00** *(2006.01)*
**B21J 5/06** *(2006.01)* **B21J 15/02** *(2006.01)*
**B21J 15/28** *(2006.01)* **F16B 25/00** *(2006.01)*
**F16B 25/10** *(2006.01)*

(54) **VERFAHREN UND VORRICHTUNG ZUM SETZEN EINER SCHRAUBE**

METHOD AND DEVICE FOR SETTING A SCREW

PROCÉDÉ ET DISPOSITIF DESTINÉ À ENFONCER UNE VIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2017 DE 102017100813**

(43) Veröffentlichungstag der Anmeldung:
**18.07.2018 Patentblatt 2018/29**

(73) Patentinhaber: **Weber Schraubautomaten GmbH 82515 Wolfratshausen (DE)**

(72) Erfinder:
• **Stützer, Robert
81475 München (DE)**
• **Schönig, Christian
82377 Penzberg (DE)**

(74) Vertreter: **Manitz Finsterwald
Patent- und Rechtsanwaltspartnerschaft mbB
Martin-Greif-Strasse 1
80336 München (DE)**

(56) Entgegenhaltungen:
**EP-A1- 2 289 659      EP-A1- 2 954 973
WO-A1-2014/036985      DE-A1- 4 225 157
DE-A1- 10 348 427      DE-A1-102011 109 815**

**Beschreibung**

Die vorliegende Erfindung betrifft ein Verfahren zum Setzen einer Schraube, insbesondere einer Fließloch formenden Schraube.

Die Erfindung betrifft außerdem eine Vorrichtung zum Setzen einer Schraube, insbesondere einer Fließloch formenden Schraube nach dem Oberbegriff des Anspruchs 9.

Ein solches Verfahren und eine solche Vorrichtung sind aus der EP 2 954 973 A1 bekannt.

Aus dem Stand der Technik ist es bekannt, Fließloch formende Schrauben mittels einer Schraubvorrichtung in ein Bauteil einzubringen, welche die Schraube mit einer vorgegebenen Drehzahl und einer vorgegebenen axialen Vorschubkraft beaufschlagt. Wird festgestellt, dass der Prozess des Einbringens bzw. Setzens der Schraube zu lange dauert oder wegen einer zu geringen Drehzahl oder zu geringen axialen Vorschubkraft nicht möglich ist, kann beim Setzen der nächsten Schraube bei einigen Schraubvorrichtungen die Drehzahl oder die axiale Vorschubkraft erhöht werden, um den Prozess zu verkürzen. Für Materialien, die häufig für Bauteile verwendet werden, können materialspezifische Werte für die Drehzahl und die axiale Vorschubkraft in der Schraubvorrichtung hinterlegt sein. So kann eine Voreinstellung der Schraubvorrichtung für bestimmte Materialien zur Verfügung gestellt werden.

All diese Verfahren haben den Nachteil, dass die aufgebrachte Drehzahl oder die aufgebrachte axiale Vorschubkraft der Schraubvorrichtung von einem Benutzer eingestellt oder angepasst werden muss, um die nächste Schraube möglichst effizient zu setzen.

Der Erfindung liegt die Aufgabe zugrunde, ein Verfahren und eine Vorrichtung zu schaffen, welches bzw. welche das Setzen von Schrauben noch effizienter gestaltet.

Die Aufgabe wird gelöst durch ein Verfahren mit den Merkmalen des Anspruchs 1 und insbesondere dadurch, dass ermittelt wird, ob die Schraube das Bauteil durchdringt, und dass die Schraube für den Fall, dass sie während einer ersten Phase das Bauteil nicht durchdringt, während einer sich an die erste Phase anschließenden zweiten Phase automatisch mit einer zweiten Drehzahl, die höher als eine erste Drehzahl ist, und/oder einer zweiten axialen Vorschubkraft, die höher als eine erste axiale Vorschubkraft ist, angetrieben wird. Die zweite Phase bildet gewissermaßen also eine "Boost"-Phase.

Der Erfindung liegt der allgemeine Gedanke zugrunde, zu erfassen, ob die Schraube während der ersten Phase das Bauteil durchdringt, und falls dies nach Ablauf der ersten Phase nicht der Fall sein sollte, den Energieeintrag in das Bauteil zu erhöhen, um das Setzen der Schraube zu beschleunigen. So wird für jede Schraube individuell der nötige Energieeintrag, beispielsweise die nötige Drehzahl und/oder die nötige axiale Vorschubkraft, ermittelt und aufgewandt, um die Schraube möglichst effizient, d.h. möglichst schnell und energiesparend, zu setzen. Schwankungen in der Materialbeschaffenheit des Bauteils, wie beispielsweise in der Festigkeit des Materials oder der Dicke des Materials, werden automatisch ausgeglichen, indem jede Schraube mit der individuell passenden Drehzahl und/oder axiale Vorschubkraft in das Bauteil eingebracht wird.

Vorteilhafte Ausführungsformen sind den Unteransprüchen, der Beschreibung und den Zeichnungen zu entnehmen.

Um das Setzen von Schrauben besonders ökonomisch zu gestalten, ist es vorteilhaft, die erste Phase maximal eine Sekunde andauern zu lassen. Vorzugsweise dauert die erste Phase zwischen 0,3 Sekunden und 0,7 Sekunden, zum Beispiel etwa 0,5 Sekunden.

Gemäß einer Ausführungsform wird die Drehzahl während der zweiten Phase kontinuierlich, d.h. stetig, erhöht. Vorzugsweise wird die Drehzahl während der zweiten Phase zumindest abschnittsweise konstant gesteigert. Insbesondere wird die Drehzahl während eines Abschnitts der zweiten Phase, in welcher die Drehzahl gesteigert wird, konstant gesteigert. Alternativ wird die Drehzahl während der zweiten Phase schrittweise erhöht. Insbesondere können die schrittweisen Erhöhungen der Drehzahl gleich groß sein und/oder nach gleichen Zeitabständen erfolgen.

Alternativ oder zusätzlich kann die axiale Vorschubkraft während der zweiten Phase kontinuierlich erhöht werden. Vorzugsweise wird die axiale Vorschubkraft während der zweiten Phase zumindest Abschnittsweise konstant gesteigert. Insbesondere wird die axiale Vorschubkraft während eines Abschnitts der zweiten Phase, in welcher die axiale Vorschubkraft gesteigert wird, konstant gesteigert. Alternativ wird die axiale Vorschubkraft während der zweiten Phase schrittweise erhöht. Insbesondere können die schrittweisen Erhöhungen der axialen Vorschubkraft gleich groß sein und/oder nach gleichen Zeitabständen erfolgen.

Gemäß einer Ausführungsform wird die Drehzahl während der zweiten Phase bis zu einem Maximalwert erhöht, sofern die Schraube das Bauteil noch nicht durchdrungen hat. Anschließend kann die Drehzahl auf dem jeweiligen Maximalwert gehalten werden, bis die Schraube das Bauteil durchdrungen hat. So kann sichergestellt werden, dass der Antrieb einer Schraubvorrichtung, mit welcher das Verfahren ausgeführt wird, nicht überbeansprucht wird.

Die Länge des Abschnitts der zweiten Phase, während dessen die Drehzahl bis zu dem Maximalwert erhöht wird, kann bis zu 3 Sekunden betragen. Vorzugsweise liegt die Länge dieses Abschnitts zwischen 0,5 und 1,5 Sekunden.

Alternativ oder zusätzlich kann die axiale Vorschubkraft während der zweiten Phase bis zu einem Maximalwert erhöht werden, sofern die Schraube das Bauteil noch nicht durchdrungen hat. Anschließend kann die axiale Vorschubkraft auf dem jeweiligen Maximalwert gehalten werden, bis die Schraube das Bauteil durchdrungen hat.

Die Länge des Abschnitts der zweiten Phase, während dessen die axiale Vorschubkraft bis zu dem Maximalwert erhöht wird, kann gleich der Länge des Abschnitts der zweiten Phase sein, während dessen die Drehzahl bis zu dem Maximalwert erhöht wird. Die Länge des Abschnitts der zweiten Phase, während dessen die axiale Vorschubkraft bis zu dem Maximalwert erhöht wird, kann bis zu 3 Sekunden betragen. Vorzugsweise liegt auch die Länge dieses Abschnitts zwischen 0,5 und 1,5 Sekunden.

Vorteilhafterweise wird die Drehzahl nach dem Durchdringen der Schraube durch das Bauteil nicht weiter erhöht. Bevorzugt wird die Drehzahl nach dem Durchdringen der Schraube durch das Bauteil sogar verringert. So wird sichergestellt, dass die Schraube ein Gewinde in das Bauteil schneiden bzw. furchen kann, ohne das Gewinde zu zerstören.

Alternativ oder zusätzlich wird die axiale Vorschubkraft nach dem Durchdringen der Schraube durch das Bauteil bevorzugt nicht weiter erhöht. Auch hier ist es vorteilhaft, die axiale Vorschubkraft nach dem Durchdringen der Schraube durch das Bauteil zu verringern.

Als ein Maß für die Energie, die zum Setzen der Schraube benötigt wurde, kann die Drehzahl im Zeitpunkt des Durchdringens der Schraube durch das Bauteil erfasst werden. Alternativ oder zusätzlich kann die aufgebrachte axiale Vorschubkraft im Zeitpunkt des Durchdringens der Schraube durch das Bauteil und/oder die Dauer der zweiten Phase bis zum Durchdringen der Schraube durch das Bauteil gemessen werden.

Vorzugsweise wird eine lokale mechanische Widerstandsfähigkeit des Bauteils anhand der Drehzahl, der axialen Vorschubkraft und/oder der Dauer der zweiten Phase bis zum Durchdringen der Schraube durch das Bauteil bestimmt. Hier sind vor allem die Dicke des Bauteils an der jeweiligen Stelle und die Festigkeit des Bauteils an der jeweiligen Stelle ausschlaggebend.

Insbesondere kann die lokale mechanische Widerstandsfähigkeit des Bauteils anhand einer erfassten Soll-Drehzahl und/oder einer erfassten Soll-Vorschubkraft im Zeitpunkt des Durchdringens der Schraube ermittelt werden. Auf diese Weise kann teures Messequipment zum tatsächlichen Messen der Ist-Drehzahl oder der Ist-Vorschubkraft eingespart werden.

Nachdem die Schraube das Bauteil, beispielsweise zwei aufeinanderliegende Bleche, durchdrungen und ein Gewinde in das dem Schraubenkopf abgewandte Blech geformt hat, muss die Schraube angezogen werden, um die Bleche sicher miteinander zu verbinden. Ein hierfür benötigtes optimales Anzugsdrehmoment, mit welchem die Schraube angezogen werden kann, kann in Abhängigkeit von der mechanischen Widerstandsfähigkeit des Bauteils ermittelt werden. Insbesondere kann das optimale Anzugsdrehmoment direkt mittels der Drehzahl, der axialen Vorschubkraft und/oder der Dauer der zweiten Phase bis zum Durchdringen der Schraube durch das Bauteil berechnet werden. Dies hat den Vorteil, dass die Schraube so angezogen werden kann, dass sie möglichst sicher hält, d.h. mit ausreichender Vorspannkraft versehen ist, ohne wegen einer Überbelastung des Materials des Bauteils auszureißen.

Allgemein gesagt wird das optimale Anzugsdrehmoment vorzugsweise also nicht durch einen Lernprozess von Schraube zu Schraube schrittweise optimiert, sondern direkt während des Setzens der Schraube jeweils individuell für jede Schraube ermittelt. Es wird hierzu beispielsweise ein Parameter gemessen, welcher zur Bestimmung einer mechanischen Widerstandsfähigkeit, insbesondere der Wandstärke des Bauteils und/oder der Festigkeit des Bauteils, während des Eindringens und Durchdringens geeignet ist. Das optimale Anzugsdrehmoment für die jeweilige Schraube wird dann quasi in Echtzeit abhängig davon bestimmt, wie hoch die mechanische Widerstandsfähigkeit des Bauteils am Setzpunkt der Schraube war. Zuletzt wird die Schraube mit dem bestimmten optimalen Anzugsdrehmoment angezogen.

Gemäß einer speziellen Ausführungsform wird ein erhöhtes Anzugsdrehmoment $M_a$, mit welchem die Schraube angezogen werden kann, mittels der folgenden Formel berechnet:

$$M_a = M_{a\,0\%} + (M_{a\,100\%} - M_{a\,0\%}) \times t_{Boost} / t_{Dauer},$$

wobei $M_{a\,0\%}$ ein für eine zuverlässige Schraubverbindung erforderliches minimales Anzugsdrehmoment darstellt, $M_{a\,100\%}$ ein maximales auf die Schraube aufbringbares Anzugsdrehmoment darstellt, $t_{Boost}$ die Dauer der zweiten Phase bis zum Durchdringen der Schraube darstellt und $t_{Dauer}$ die Dauer der zweiten Phase bis zur Erreichung einer maximal möglichen Drehzahl und/oder axialen Vorschubkraft darstellt.

Das minimale Anzugsdrehmoment $M_{a\,0\%}$ wird somit verwendet, wenn die Schraube bereits während der ersten Phase das Bauteil durchdrungen hat. Das maximale Anzugsdrehmoment $M_{a\,100\%}$ wird verwendet, wenn die Schraube bei Erreichen der maximal möglichen Drehzahl und/oder axialen Vorschubkraft das Bauteil durchdringt. Dringt die Schraube erst nach der Zeitdauer $t_{Dauer}$ in das Bauteil ein, wird das Anzugsdrehmoment nicht noch weiter erhöht, sondern die Schraube wird auch in diesem Fall mit dem maximalen Anzugsdrehmoment $M_{a\,100\%}$ angezogen.

Weiterer Gegenstand der Erfindung ist eine Vorrichtung mit den Merkmalen des Anspruchs 9. Diese umfasst eine Einrichtung zur Detektion des Durchdringens der Schraube und eine Antriebssteuerung, welche die Drehzahl der Schraube und/oder die axiale Vorschubkraft auf die Schraube während einer zweiten Phase erhöht, falls definierte Umschaltparameter nicht erreicht werden, beispielsweise falls sich der Vorschubweg, die Vorschubgeschwindigkeit oder die Vorschubkraft während einer ersten Phase nicht wesentlich bzw. charakteristisch ändert. Hierdurch kann die von der Vorrichtung aufgebrachte Drehzahl der Schraube und/oder die von der Vorrichtung aufgebrachte axiale Vorschubkraft an eine zum Durchdringen des Bauteils benötigte Drehzahl bzw. axiale Vorschubkraft automatisch angepasst werden.

Die Detektionseinrichtung kann das Durchdringen der Schraube beispielsweise anhand des Vorschubwegs, anhand einer plötzlichen Zunahme der Vorschubgeschwindigkeit und/oder anhand einer plötzlichen Abnahme der axialen Vorschubkraft erfassen.

Gemäß einer Ausführungsform ist außerdem eine Erfassungseinrichtung vorgesehen, welche die Drehzahl erfasst, bei welcher die Schraube das Bauteil durchdringt. Die erfasste Drehzahl kann eine Soll-Drehzahl und/oder eine Ist-Drehzahl sein. Auf diese Weise kann die mechanische Widerstandsfähigkeit des Bauteils bestimmt werden, welche beispielsweise Rückschlüsse auf die Bauteildicke an der Fügestelle erlaubt.

Alternativ oder zusätzlich kann die Erfassungseinrichtung die axiale Vorschubkraft und/oder den Zeitpunkt erfassen, bei welcher bzw. bei welchem die Schraube das Bauteil durchdringt. Dabei kann die erfasste axiale Vorschubkraft eine Soll-Vorschubkraft und/oder eine Ist-Vorschubkraft sein. Anhand dieser Parameter lässt sich ebenfalls die mechanische Widerstandsfähigkeit des Bauteils bestimmen.

Um Messfehler auszuschließen, erfasst die Erfassungseinrichtung bevorzugt alle drei Parameter, d.h. sowohl die Drehzahl, als auch die axiale Vorschubkraft als auch den Zeitpunkt, bei welcher bzw. bei welchem die Schraube das Bauteil durchdringt.

Gemäß einer besonders kostengünstigen Ausführungsform ist die Erfassungseinrichtung in die Detektionseinrichtung integriert. In diesem Fall detektiert die Detektionseinrichtung nicht nur das Durchdringen der Schraube durch das Bauteil, beispielsweise anhand des Vorschubwegs, anhand einer plötzlichen Zunahme der Vorschubgeschwindigkeit und/oder anhand einer plötzlichen Abnahme der axialen Vorschubkraft, sondern zusätzlich auch die mechanische Widerstandsfähigkeit des Bauteils, beispielsweise anhand der maximalen axialen Vorschubkraft vor dem Durchdringen der Schraube, anhand der maximalen Drehzahl vor dem Durchdringen der Schraube und/oder anhand des Zeitpunkts des Durchdringens der Schraube. Die Detektionseinrichtung erfüllt in diesem Fall also eine Doppelfunktion

Konkret kann zur Ermittlung der mechanischen Widerstandsfähigkeit des Bauteils während des Setzens einer Schraube ein Prozessor vorgesehen sein, welcher die mechanische Widerstandsfähigkeit des Bauteils anhand der Drehzahl, der axialen Vorschubkraft und/oder des Zeitpunkts, bei welcher bzw. in welchem die Schraube das Bauteil durchdringt, berechnet.

Außerdem kann dieser oder ein weiterer Prozessor vorgesehen sein, um ein erhöhtes Anzugsdrehmoment für die Schraube in Abhängigkeit von der mechanischen Widerstandsfähigkeit des Bauteils zu ermitteln. So kann die Schraube entsprechend der mechanischen Widerstandsfähigkeit des Bauteils angezogen werden.

Nachfolgend wird die Erfindung anhand einer rein beispielhaften Ausführungsform unter Bezugnahme auf die beigefügten Zeichnungen beschrieben. Es zeigen:

Fig. 1    ein Flussdiagramm eines erfindungsgemäßen Verfahrens;
Fig. 2    eine Schraube, welche ein Bauteil durchdrungen hat;
Fig. 3    eine Verlaufskennlinie für die Drehzahl;
Fig. 4    eine Verlaufskennlinie für die Axialkraft; und
Fig. 5    eine schematische Darstellung einer erfindungsgemäßen Vorrichtung.

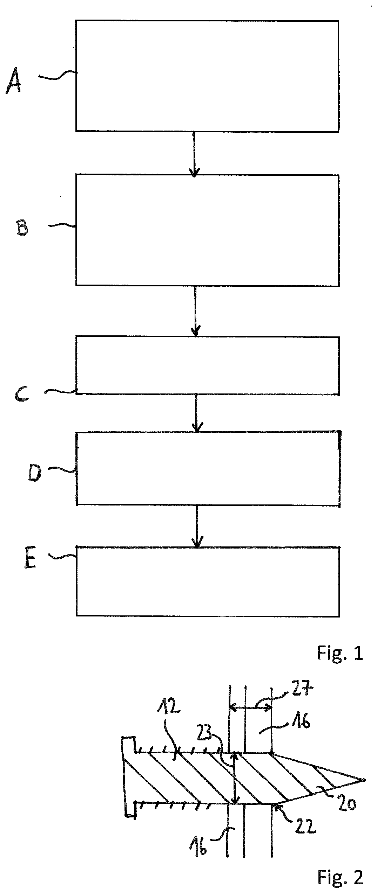

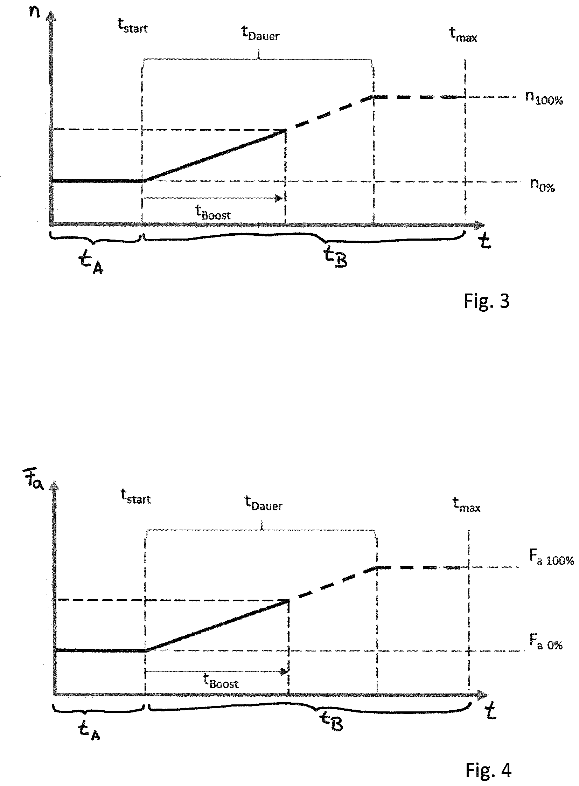

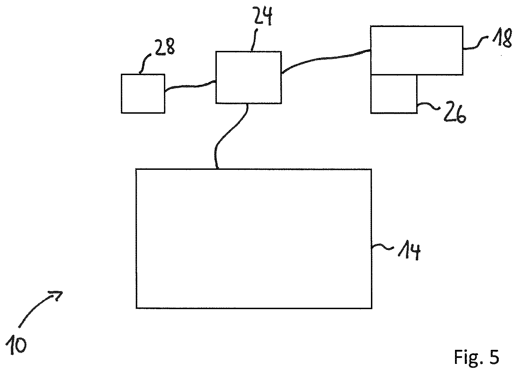

Fig. 1 zeigt ein Flussdiagramm eines erfindungsgemäßen Verfahrens, mit dem eine Schraubvorrichtung 10 (Fig. 5) betrieben werden kann. In einem ersten Schritt A wird eine Fließloch formende Schraube 12 (Fig. 2) während einer zeitlich begrenzten ersten Phase $t_A$ (Fig. 3 und 4), welche ca. 0,5 Sekunden lang andauert, mit einer ersten Drehzahl $n_{0\%}$ und einer ersten axialen Vorschubkraft $F_{a\,0\%}$ von einer Antriebseinheit 14 angetrieben, um die Schraube 12 durch ein Bauteil 16, beispielsweise zwei flächig aufeinander liegende, einseitig zugängliche Bleche, hindurchzutreiben. Dabei wird parallel zu Schritt A kontinuierlich von einer Detektionseinrichtung 18 ermittelt, ob die Schraube 12 das Bauteil 16 durchdrungen hat. Bei Fließloch formenden Schrauben hat die Schraube 12 das Bauteil 16 durchdrungen, wenn - wie in Fig. 2 gezeigt - eine konisch zulaufende Spitze 20 der Schraube 12 wieder aus dem Bauteil 16 heraustritt und das durch die Schraube 12 erzeugte Loch 22 in dem Bauteil 16 einen minimalen Durchmesser 23 aufweist, der dem Durchmesser eines gewindefreien Schafts der Schraube 12 entspricht.

Hat die Schraube 12 das Bauteil 16 nach Ablauf der ersten Phase $t_A$ noch nicht durchdrungen, startet eine Antriebssteuerung 24 in einem auf Schritt A folgenden Schritt B eine zweite Phase $t_B$, die einen Boost-Abschnitt $t_{Boost}$ umfasst. Während der zweiten Phase $t_B$ wird die Drehzahl $n$ (Fig. 3) bis zu einer maximalen Drehzahl $n_{max}$ konstant gesteigert, sofern die Schraube 12 nicht vorher das Bauteil 16 durchdringt. Gleichzeitig wird die axiale Vorschubkraft $F_a$ (Fig. 4) ebenfalls bis zu einer maximalen axialen Vorschubkraft $F_{a\,max}$ konstant gesteigert, sofern die Schraube 12 nicht vorher das Bauteil 16 durchdringt. Während der Steigerung der Drehzahl n bzw. der axialen Vorschubkraft $F_a$ wird weiterhin kontinuierlich detektiert, ob die Schraube 12 das Bauteil 16 durchdrungen hat. Ist letzteres der Fall, werden die Drehzahl n und die axiale Vorschubkraft $F_a$ auf Werte herabgesetzt, welche sich zum Formen eines Gewindes eignen.

Durchdringt die Schraube 12 das Bauteil 16 nicht bis zu einem Zeitpunkt, an dem eine maximale Drehzahl $n_{100\%}$ und eine maximale axiale Vorschubkraft $F_{a\,100\%}$ erreicht sind, so wird die Schraube 12 mit der maximalen Drehzahl $n_{100\%}$ und der maximalen axialen Vorschubkraft $F_{a\,100\%}$ weiter angetrieben, bis entweder die Schraube 12 das Bauteil 16 durchdringt oder eine maximale Zeit $t_{max}$ erreicht wird. Ist die maximale Zeit $t_{max}$ erreicht, bricht die Schraubvorrichtung 10 das Setzen der Schraube 12 ab. Durchdringt die Schraube vor Erreichen der maximale Zeit $t_{max}$ das Bauteil, werden die Drehzahl n und die axiale Vorschubkraft $F_a$ auf Werte herabgesetzt, welche sich zum Formen eines Gewindes eignen.

Dringt die Schraube 12 während der zweiten Phase $t_B$ in das Bauteil 16 ein, wird mittels einer Erfassungseinrichtung 26 in einem Schritt C eine Dauer $t_{Boost}$ ab Beginn der zweiten Phase $t_B$ bis zum Durchdringen der Schraube 12 durch das Bauteil 16 ermittelt. Die Dauer $t_{Boost}$ ist abhängig von einer mechanischen Widerstandsfähigkeit des Bauteils 16, d.h. unter anderem von der Dicke 27 des Bauteils 16 und dessen Festigkeit, und kann deshalb als Kenngröße für die mechanische Widerstandsfähigkeit genutzt werden. Mittels der Dauer $t_{Boost}$ wird in einem Schritt D ein erhöhtes Anzugsdrehmoment $M_a$ für die Schraube 12 berechnet, und zwar nach der Formel

$$M_a = M_{a\,0\%} + (M_{a\,100\%} - M_{a\,0\%}) \times t_{Boost} / t_{Dauer},$$

wobei $M_{a\,0\%}$ ein für eine zuverlässige Schraubverbindung erforderliches minimales Anzugsdrehmoment darstellt, $M_{a\,100\%}$ ein maximales auf die Schraube aufbringbares Anzugsdrehmoment darstellt, $t_{Boost}$ die zeitliche Dauer der zweiten Phase bis zum Durchdringen der Schraube 12 darstellt und $t_{Dauer}$ die Dauer der zweiten Phase bis zur Erreichung der maximal möglichen Drehzahl $n_{100\%}$ und maximal möglichen axialen Vorschubkraft $F_{a\,100\%}$ darstellt.

In einem Schritt E wird die Schraube 12 mit dem erhöhten Anzugsdrehmoment $M_a$ angezogen. Jede Schraube wird somit abhängig von der jeweiligen Materialstärke bzw. Blechdicke des Bauteils angezogen. So ist sichergestellt, dass jede mit diesem Verfahren gesetzte Schraube 12 unter Berücksichtigung der mechanischen Belastbarkeit des Bauteils 16 optimal, d.h. weder zu schwach, noch zu stark, angezogen wird.

Die Figuren 3 und 4 zeigen den Verlauf der Drehzahl n und der axialen Vorschubkraft $F_a$ während des in Fig. 1 skizzierten Verfahrens. Die Drehzahl n wird in der ersten Phase $t_A$ ca. 0,5 Sekunden konstant auf einer Mindestdrehzahl $n_{0\%}$ gehalten. Gleiches gilt für die axiale Vorschubkraft $F_a$ welche auf einer Mindestvorschubkraft $F_{a\,0\%}$ gehalten wird. Hat die Schraube 12 nach Ablauf der ersten Phase $t_A$ das Bauteil 16 noch nicht durchdrungen, werden die Drehzahl n und die axiale Vorschubkraft $F_a$ ab einer Startzeit $t_{start}$ für die zweite Phase über einen Zeitraum von maximal 0,5 bis 1,5 Sekunden konstant gesteigert, bis nach einer Boost-Zeit $t_{Boost}$ die Schraube 12 das Bauteil 16 durchdringt. Die Boost-Zeit $t_{Boost}$ steht somit für die Zeitdauer während der zweiten Phase $t_B$ bis die Schraube 12 das Bauteil 16 durchdrungen hat.

Es kann - wie oben beschrieben - vorkommen, dass die Schraube 12 auch bis zum Erreichen einer maximal möglichen Drehzahl $n_{100\%}$ und einer maximal möglichen axialen Vorschubkraft $F_{a\,100\%}$ das Bauteil 16 noch nicht durchdrungen hat. Nach Ablauf einer Zeit $t_{Dauer}$, in der die Drehzahl n und/oder die axiale Vorschubkraft $F_a$ bis zu deren Maximalwerten $n_{100\%}$, $F_{a\,100\%}$ gesteigert werden, wird die Schraube 12 mit gleichbleibender Drehzahl $n_{100\%}$ und gleichbleibender axialer Vorschubkraft $F_{a\,100\%}$ bis zu einer Maximaldauer $t_{max}$ angetrieben. Falls nach Ablauf der Maximaldauer $t_{max}$ die Schraube 12 noch nicht in das Bauteil 16 eingedrungen ist, wird die Schraubvorrichtung 10 abgeschaltet und der Setzvorgang unvollendet abgebrochen.

Fig. 5 zeigt schematisch eine Schraubvorrichtung 10 zur Ausführung des in Fig. 1 skizzierten Verfahrens. Die Schraubvorrichtung 10 ist insbesondere dazu geeignet, Fließloch formende Schrauben 12 in ein Bauteil 16 einzubringen. Die Schraubvorrichtung 10 umfasst die Antriebseinheit 14, welche dazu ausgebildet ist, die Schraube 12 in Rotation zu versetzen und gleichzeitig eine axiale Vorschubkraft auf die Schraube 12 auszuüben. Ferner umfasst die Schraubvorrichtung 10 die Detektionseinrichtung 18, welche einen Vorschubweg und/oder eine Vorschubgeschwindigkeit der Schraube 12 und/oder eine auf die Schraube 12 aufgebrachte Vorschubkraft erfasst, um festzustellen, wann die Schraube 12 das Bauteil 16 durchdrungen hat. Beispielsweise kann durch eine Zunahme der Vorschubgeschwindigkeit oder eine Abnahme der auf die Schraube 12 aufzubringenden Vorschubkraft erkannt werden, dass die Schraube 12 das Bauteil 16 durchdrungen hat. Die Schraubvorrichtung 10 umfasst ferner die Antriebssteuerung 24, welche die Drehzahl n der Schraube 12 und/oder die axiale Vorschubkraft $F_a$ auf die Schraube 12 während der zweiten Phase erhöht, falls sich der Vorschubweg, die Vorschubgeschwindigkeit oder die Vorschubkraft über die Dauer der ersten Phase nicht wesentlich bzw. charakteristisch ändert und somit die Schraube 12 noch nicht das Bauteil 16 durchdrungen hat. Die Antriebssteuerung 24 ist mit der Detektionseinrichtung 18 verbunden, welche der Antriebssteuerung 24 übermittelt, dass die Schraube 12 das Bauteil 16 durchdrungen hat.

Zusätzlich umfasst die Schraubvorrichtung 10 die Erfassungseinrichtung 26, die ermittelt, zu welchem Zeitpunkt die Schraube 12 das Bauteil 16 durchdrungen hat, bzw. die die Boost-Zeit $t_{boost}$ ermittelt. Die Schraubvorrichtung 10 umfasst einen Prozessor 28, welcher einen Kennwert für die mechanische Widerstandsfähigkeit des Bauteils 16 übermittelt bekommt. Die mechanische Widerstandsfähigkeit des Bauteils 16 drückt sich im vorliegenden Beispiel durch die benötigte Zeit während der zweiten Phase $t_B$ aus, bis die Schraube 12 das Bauteil 16 durchdrungen hat, d.h. der Boost-Zeit $t_{Boost}$. Der Prozessor 28 berechnet aus der erfassten Boost-Zeit $t_{Boost}$ ein erhöhtes Anzugsdrehmoment $M_a$ für die Schraube 12, welches mit steigender Boost-Zeit $t_{Boost}$ zunimmt.

**Bezugszeichenliste**

| | |
|---|---|
| 10 | Schraubvorrichtung |
| 12 | Schraube |
| 14 | Antriebseinheit |
| 16 | Bauteil |
| 18 | Detektionseinrichtung |
| 20 | Spitze |
| 22 | Loch |
| 23 | Durchmesser |
| 24 | Antriebssteuerung |
| 26 | Erfassungseinrichtung |
| 27 | Dicke |
| 28 | Prozessor |

| | |
|---|---|
| A | Schritt 1 |
| B | Schritt 2 |
| C | Schritt 3 |
| D | Schritt 4 |
| E | Schritt 5 |

| | |
|---|---|
| $t_A$ | erste Phase |
| $t_B$ | zweite Phase |
| $n$ | Drehzahl |
| $F_a$ | axiale Vorschubkraft |
| $n_{0\%}$ | erste Drehzahl |
| $F_{a\,0\%}$ | erste axiale Vorschubkraft |
| $n_{100\%}$ | maximale Drehzahl |
| $F_{a\,100\%}$ | maximale axiale Vorschubkraft |
| $t_{start}$ | Startzeit der Boost-Phase |
| $t_{Boost}$ | Boost-Phase |
| $t_{Dauer}$ | Zeitdauer bis $n_{100\%}$ und/oder $F_{a\,100\%}$ |
| $t_{max}$ | maximale Zeit |
| $M_a$ | Anzugsdrehmoment |
| $M_{a\,0\%}$ | minimales Anzugsdrehmoment |
| $M_{a\,100\%}$ | maximales Anzugsdrehmoment |

**Patentansprüche**

1. Verfahren zum Setzen einer Schraube (12), insbesondere einer Fließloch formenden Schraube (12), bei dem die Schraube (12) während einer zeitlich begrenzten ersten Phase ($t_A$) mit einer ersten Drehzahl ($n_{0\%}$) und einer ersten axialen Vorschubkraft ($F_{a\,0\%}$) angetrieben wird, um die Schraube (12) durch zumindest ein Bauteil (16) hindurchzutreiben,
ermittelt wird, ob die Schraube (12) das Bauteil (16) durchdrungen hat, und
für den Fall, dass die Schraube (12) während der ersten Phase ($t_A$) das Bauteil (16) nicht durchdrungen hat, die Schraube (12) während einer sich an die erste Phase ($t_A$) anschließenden zweiten Phase ($t_B$) automatisch mit einer zweiten Drehzahl ($n$), die höher als die erste Drehzahl ($n_{0\%}$) ist, und/oder mit einer zweiten axialen Vorschubkraft ($F_a$), die höher als die erste axiale Vorschubkraft ($F_{a\,0\%}$) ist, angetrieben wird.

**2.** Verfahren nach Anspruch 1,
**dadurch gekennzeichnet, dass**
die Drehzahl (n) und/oder die axiale Vorschubkraft ($F_a$) während der zweiten Phase ($t_B$) kontinuierlich oder schrittweise erhöht werden/wird.

**3.** Verfahren nach Anspruch 1 oder 2,
**dadurch gekennzeichnet, dass**
die Drehzahl (n) und/oder die axiale Vorschubkraft ($F_a$) während der zweiten Phase ($t_B$) bis zu einem jeweiligen Maximalwert ($n_{100\%}$, $F_{a\,100\%}$) erhöht werden/wird, sofern die Schraube (12) das Bauteil (16) noch nicht durchdrungen hat.

**4.** Verfahren nach zumindest einem der vorstehenden Ansprüche,
**dadurch gekennzeichnet, dass**
die Drehzahl (n) und/oder die axiale Vorschubkraft ($F_a$) nach dem Durchdringen der Schraube (12) durch das Bauteil (16) nicht weiter erhöht werden/wird und insbesondere die Drehzahl (n) und/oder die axiale Vorschubkraft ($F_a$) nach dem Durchdringen der Schraube (12) durch das Bauteil (16) verringert werden/wird.

**5.** Verfahren nach zumindest einem der vorstehenden Ansprüche,
**dadurch gekennzeichnet, dass**
die Drehzahl (n), die axiale Vorschubkraft ($F_a$) und/oder die Dauer der zweiten Phase bis zum Durchdringen der Schraube ($t_{Boost}$) durch das Bauteil (16) gemessen werden/wird.

**6.** Verfahren nach Anspruch 5,
**dadurch gekennzeichnet, dass**
eine mechanische Widerstandsfähigkeit des Bauteils (16), insbesondere eine Dicke des Bauteils (16) und/oder eine Festigkeit des Bauteils (16), anhand der Drehzahl (n), der axialen Vorschubkraft ($F_a$) und/oder der Dauer der zweiten Phase bis zum Durchdringen der Schraube ($t_{Boost}$) durch das Bauteil (16) bestimmt wird.

**7.** Verfahren nach zumindest einem der vorstehenden Ansprüche,
**dadurch gekennzeichnet, dass**
ein Anzugsdrehmoment ($M_a$), mit welchem die Schraube (12) angezogen werden kann, in Abhängigkeit von einer mechanischen Widerstandsfähigkeit des Bauteils (16) ermittelt wird.

**8.** Verfahren nach zumindest einem der vorstehenden Ansprüche,
**dadurch gekennzeichnet, dass**
ein erhöhtes Anzugsdrehmoment ($M_a$), mit welchem die Schraube (12) angezogen werden kann, mittels der folgenden Formel berechnet wird:

$$M_a = M_{a\,0\%} + (M_{a\,100\%} - M_{a\,0\%}) \times t_{Boost} / t_{Dauer},$$

wobei $M_{a\,0\%}$ ein minimales Anzugsdrehmoment darstellt, $M_{a\,100\%}$ ein maximales Anzugsdrehmoment darstellt, $t_{Boost}$ die Dauer der zweiten Phase ($t_B$) bis zum Durchdringen der Schraube (12) darstellt und $t_{Dauer}$ die Dauer der zweiten Phase ($t_B$) bis zur Erreichung einer maximal möglichen Drehzahl ($n_{100\%}$) und/oder maximalen axialen Vorschubkraft ($F_{a\,100\%}$) darstellt.

**9.** Schraubvorrichtung (10) zum Setzen einer Schraube (12), insbesondere einer Fließloch formenden Schraube (12), umfassend
eine Antriebseinheit (14), welche dazu ausgebildet ist, die Schraube (12) in Rotation zu versetzen und eine axiale Vorschubkraft ($F_a$) auf die Schraube (12) auszuüben, um die Schraube (12) durch zumindest ein Bauteil (16) hindurchzutreiben, **dadurch gekennzeichnet, dass** die Schraubvorrichtung
eine Einrichtung (18) zur Detektion eines Durchdringens der Schraube (12) durch das Bauteil (16), welche einen Vorschubweg und/oder eine Vorschubgeschwindigkeit der Schraube (12) und/oder eine auf die Schraube (12) aufgebrachte axiale Vorschubkraft erfasst, und
eine Antriebssteuerung (24), welche die Drehzahl (n) der Schraube (12) und/oder die axiale Vorschubkraft ($F_a$) auf die Schraube (12) während einer zweiten Phase ($t_B$) automatisch erhöht, falls sich der Vorschubweg, die Vorschubgeschwindigkeit und/oder die aufgebrachte axiale Vorschubkraft während einer ersten Phase ($t_A$) nicht wesentlich bzw. charakteristisch ändern bzw. ändert, umfasst.

**10.** Schraubvorrichtung (10) nach Anspruch 9,
**dadurch gekennzeichnet, dass**
wenigstens eine Erfassungseinrichtung (26) vorgesehen ist, welche die Drehzahl (n), die axiale Vorschubkraft ($F_a$) und/oder den Zeitpunkt erfasst, bei welcher bzw. welchem die Schraube (12) das Bauteil (16) durchdringt.

**11.** Schraubvorrichtung (10) nach Anspruch 10,
**dadurch gekennzeichnet, dass**
ein Prozessor (28) vorgesehen ist, welcher eine mechanische Widerstandsfähigkeit des Bauteils (16), insbesondere eine Dicke (27) des Bauteils (16) und/oder eine Festigkeit des Bauteils (16), anhand der Drehzahl (n), der axialen Vorschubkraft ($F_a$) und/oder des Zeitpunkts ermittelt, bei welcher bzw. welchem die Schraube (12) das Bauteil (16) durchdringt.

**12.** Schraubvorrichtung (10) nach Anspruch 11,
**dadurch gekennzeichnet, dass**
ein Prozessor (28) vorgesehen ist, welcher ein erhöhtes Anzugsdrehmoment ($M_a$) für die Schraube (12) in Abhängigkeit von der mechanischen Widerstandsfähigkeit des Bauteils (16) ermittelt.

**Claims**

**1.** A method of setting a screw (12), in particular a flow-drilling screw (12), in which
the screw (12) is driven at a first revolution speed ($n_{0\%}$) and at a first axial feed force ($F_{a\,0\%}$) during a time-limited first phase ($t_A$) to drive the screw (12) through at least one component (16);
it is established whether the screw (12) has penetrated the component (16); and,
in the event that the screw (12) has not penetrated the component (16) during the first phase ($t_A$), the screw (12) is automatically driven at a second revolution speed (n) which is higher than the first revolution speed ($n_{0\%}$) and/or is driven at a second axial feed force ($F_a$) which is higher than the first axial feed force ($F_{a\,0\%}$) during a second phase ($t_B$) subsequent to the first phase ($t_A$).

**2.** A method in accordance with claim 1,
**characterized in that**
the revolution speed (n) and/or the axial feed force ($F_a$) is/are increased continuously or step-wise during the second phase ($t_B$).

**3.** A method in accordance with claim 1 or claim 2,
**characterized in that**
the revolution speed (n) and/or the axial feed force ($F_a$) is/are increased up to a respective maximum value ($n_{100\%}$, $F_{a\,100\%}$) during the second phase ($t_B$) provided that the screw (12) has not yet penetrated the component (16).

**4.** A method in accordance with at least one of the preceding claims,
**characterized in that**
the revolution speed (n) and/or the axial feed force ($F_a$) is/are not further increased after the penetration of the screw (12) through the component (16); and **in that** in particular the revolution speed (n) and/or the axial feed force ($F_a$) is/are reduced after the penetration of the screw (12) through the component (16).

**5.** A method in accordance with at least one of the preceding claims,
**characterized in that**
the revolution speed (n), the axial feed force ($F_a$) and/or the duration of the second phase up to the penetration of the screw ($t_{Boost}$) through the component (16) is/are measured.

**6.** A method in accordance with claim 5,
**characterized in that**
a mechanical resistance of the component (16), in particular a thickness of the component (16) and/or a strength of the component (16), is established with reference to the revolution speed (n), to the axial feed force ($F_a$) and/or to the duration of the second phase up to the penetration of the screw ($t_{Boost}$) through the component (16).

**7.** A method in accordance with at least one of the preceding claims,
**characterized in that**
a tightening torque ($M_a$) by which the screw (12) can be tightened is established in dependence on a mechanical resistance of the component (16).

**8.** A method in accordance with at least one of the preceding claims,
**characterized in that**
an increased tightening torque ($M_a$) by which the screw (12) can be tightened is calculated by means of the following formula:

$$M_a = M_{a\,0\%} + (M_{a\,100\%} - M_{a\,0\%}) \times t_{Boost} / t_{Duration},$$

where $M_{a\,0\%}$ is a minimal tightening torque; $M_{a\,100\%}$ is a maximum tightening torque; $t_{Boost}$ is the duration of the second phase ($t_B$) up to the penetration of the screw (12); and $t_{Duration}$ is the duration of the second phase ($t_B$) up to the reaching of a maximum possible revolution speed ($n_{100\%}$) and/or a maximum axial feed force ($F_{a\,100\%}$).

**9.** A screwing apparatus (10) for setting a screw (12), in particular a flow-drilling screw (12), comprising

a drive unit (14) which is configured to set the screw (12) into rotation and to exert an axial feed force ($F_a$) on the screw (12) to drive the screw (12) through at least one component (16),
**characterized in that** the screwing apparatus comprises
a device (18) for detecting a penetration of the screw (12) through the component (16) which determines a feed path and/or a feed rate of the screw (12) and/or an axial feed force applied to the screw (12); and
a drive control (24) which automatically increases the revolution speed (n) of the screw (12) and/or the axial feed force ($F_a$) on the screw (12) during a second phase ($t_B$) if the feed path, the feed rate and/or the applied axial feed force does/do not change substantially or characteristically during a first phase ($t_A$).

**10.** A screwing apparatus (10) in accordance with claim 9,
**characterized in that**
at least one determination device (26) is provided which determines the revolution speed (n), the axial feed force ($F_a$) and/or the point in time at which the screw (12) penetrates the component (16).

**11.** A screwing apparatus (10) in accordance with claim 10,
**characterized in that**
a processor (28) is provided which establishes a mechanical resistance of the component (16), in particular a thickness (27) of the component (16) and/or a strength of the component (16), with reference to the revolution speed (n), to the axial feed force ($F_a$) and/or to the point in time at which the screw (12) penetrates the component (16).

**12.** A screwing apparatus (10) in accordance with claim 11,
**characterized in that**
a processor (28) is provided which establishes an increased tightening torque ($M_a$) for the screw (12) in dependence on the mechanical resistance of the component (16).

**Revendications**

**1.** Procédé pour poser une vis (12), en particulier une vis (12) formant un trou d'écoulement, dans lequel
pendant une première phase ($t_A$) limitée dans le temps, la vis (12) est entraînée à une première vitesse de rotation ($n_{0\%}$) et avec une première force d'avance axiale ($F_{a\,0\%}$) pour faire passer la vis (12) à travers au moins un élément (16),
il est déterminé si la vis (12) a traversé l'élément (16) et,
dans le cas où la vis (12) n'a pas traversé l'élément (16) pendant la première phase ($t_A$), la vis (12) est entraînée automatiquement, pendant une deuxième phase ($t_B$) qui suit la première phase ($t_A$), à une deuxième vitesse de rotation (n) qui est supérieure à la première vitesse ($n_{0\%}$) et/ou avec une deuxième force d'avance axiale ($F_a$) qui est supérieure à la première force d'avance axiale ($F_{a\,0\%}$).

**2.** Procédé selon la revendication 1,
**caractérisé en ce que**
la vitesse de rotation (n) et/ou la force d'avance axiale ($F_a$) est/sont augmentée(s) de façon continue ou par paliers pendant la deuxième phase ($t_B$).

**3.** Procédé selon la revendication 1 ou 2,
**caractérisé en ce que**
la vitesse de rotation (n) et/ou la force d'avance axiale ($F_a$) est/sont augmentée(s) pendant la deuxième phase ($t_B$) jusqu'à une valeur maximale respective ($n_{100\%}$, $F_{a\ 100\%}$) si la vis (12) n'a pas encore traversé l'élément (16).

**4.** Procédé selon au moins l'une des revendications précédentes,
**caractérisé en ce que**
la vitesse de rotation (n) et/ou la force d'avance axiale ($F_a$) n'est/ne sont plus augmentée(s) après que la vis (12) a traversé l'élément (16) et en particulier la vitesse de rotation (n) et/ou la force d'avance axiale ($F_a$) est/sont réduite(s) après que la vis (12) a traversé l'élément (16).

**5.** Procédé selon au moins l'une des revendications précédentes,
**caractérisé en ce que**
la vitesse de rotation (n), la force d'avance axiale ($F_a$) et/ou la durée de la deuxième phase jusqu'à la traversée de l'élément (16) par la vis ($t_{Boost}$) est/sont mesurée(s).

**6.** Procédé selon la revendication 5,
**caractérisé en ce**
**qu'**une résistance mécanique de l'élément (16), en particulier une épaisseur de l'élément (16) et/ou une solidité de l'élément (16), est déterminée à partir de la vitesse de rotation (n), de la force d'avance axiale ($F_a$) et/ou de la durée de la deuxième phase jusqu'à la traversée de l'élément (16) par la vis ($t_{Boost}$).

**7.** Procédé selon au moins l'une des revendications précédentes,
**caractérisé en ce que**
l'on détermine un couple de serrage ($M_a$) avec lequel la vis (12) peut être serrée en fonction d'une résistance mécanique de l'élément (16).

**8.** Procédé selon au moins l'une des revendications précédentes,
**caractérisé en ce que**
l'on calcule un couple de serrage ($M_a$) accru avec lequel la vis (12) peut être serrée au moyen de la formule suivante :

$$\mathrm{Ma} = M_{a\ 0\%} + (M_{a\ 100\%} - M_{a\ 0\%}) \text{ x } t_{Boost} / t_{Durée},$$

où $M_{a\ 0\%}$ représente un couple de serrage minimal, $M_{a\ 100\%}$ représente un couple de serrage maximal, $t_{Boost}$ représente la durée de la deuxième phase jusqu'à la traversée de la vis (12) et $t_{Durée}$ représente la durée de la deuxième phase ($t_B$) jusqu'à l'atteinte d'une vitesse de rotation maximale possible ($n_{100\%}$) et/ou d'une force d'avance axiale maximale ($F_{a\ 100\%}$).

**9.** Dispositif de vissage (10) pour poser une vis (12), en particulier une vis (12) formant un trou d'écoulement, comprenant une unité d'entraînement (14) qui est conçue pour mettre la vis (12) en rotation et pour exercer une force d'avance axiale ($F_a$) sur la vis (12) pour faire passer la vis (12) à travers au moins un élément (16),
**caractérisé en ce que** le dispositif de vissage comprend
un moyen (18) pour détecter un passage de la vis (12) à travers l'élément (16), qui détecte une course d'avance et/ou une vitesse d'avance de la vis (12) et/ou une force d'avance axiale appliquée à la vis (12), et
une commande d'entraînement (24) qui augmente automatiquement la vitesse de rotation (n) de la vis (12) et/ou la force d'avance axiale ($F_a$) appliquée à la vis (12) pendant une deuxième phase ($t_B$) si la course d'avance, la vitesse d'avance et/ou la force d'avance axiale appliquée ne change/ne changent pas sensiblement ou de façon caractéristique pendant une première phase ($t_A$).

**10.** Dispositif de vissage (10) selon la revendication 9,
**caractérisé en ce**

**qu'**il est prévu au moins un moyen de détection (26) qui détecte la vitesse de rotation (n), la force d'avance axiale ($F_a$) et/ou le moment à laquelle ou auquel la vis (12) traverse l'élément (16).

11. Dispositif de vissage (10) selon la revendication 10,
**caractérisé en ce**
**qu'**il est prévu un processeur (28) qui détermine une résistance mécanique de l'élément (16), en particulier une épaisseur (27) de l'élément (16) et/ou une solidité de l'élément (16) à partir de la vitesse de rotation (n), de la force d'avance axiale ($F_a$) et/ou du moment à laquelle ou auquel la vis (12) traverse l'élément (16).

12. Dispositif de vissage (10) selon la revendication 11,
**caractérisé en ce**
**qu'**il est prévu un processeur (28) qui détermine un couple de serrage ($M_a$) accru pour la vis (12) en fonction de la résistance mécanique de l'élément (16).

A

B

C

D

E

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2954973 A1